# EUROPÄISCHE PATENTSCHRIFT

(11) **EP 2 906 377 B1**
(45) Veröffentlichungstag und Bekanntmachung des Hinweises auf die Patenterteilung: **08.07.2020**
(21) Anmeldenummer: 13773736.7
(22) Anmeldetag: 07.10.2013
(51) Int. Cl.: B23B 31/26, B23B 31/20

(54) **AUSWUCHT- ODER MESSADAPTER**
BALANCING OR MEASURING ADAPTER
ADAPTATEUR D'ÉQUILIBRAGE OU DE MESURE

(30) Priorität: 10.10.2012 DE 102012109633
(43) Veröffentlichungstag der Anmeldung: 19.08.2015
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2013/070764
(87) Internationale Veröffentlichungsnummer: WO 2014/056815

(56) Entgegenhaltungen:
- WO-A1-00/45983
- WO-A1-2010/073501
- WO-A2-2004/098828

## Beschreibung

Die Erfindung betrifft einen Auswucht- oder Messadapter nach dem Oberbegriff des Anspruchs 1 und eine Auswucht- oder Messmaschine mit einem derartigen Auswucht- oder Messadapter.

Derartige Auswucht- oder Messadapter werden zur Einspannung eines rotierenden Bauteils an einer Auswucht- und/oder Messmaschine eingesetzt. Aus der DE 299 80 181 U1 ist eine Auswuchtmaschine mit einem gattungsgemäßen Auswuchtadapter bekannt. Dieser enthält einen Grundkörper mit einer zentrischen Aufnahmeöffnung für das zu spannende Bauteil und eine relativ zum Grundkörper axial verstellbare Zangenbetätigungseinheit für eine Spannzange. Die Spannzange ist bei dieser bekannten Ausführung fest an dem Grundkörper montiert und gegenüber diesem nicht axial beweglich. Durch axiale Verstellung der Zangenbetätigungseinheit sind die Spannzungen der Spannzange zwischen einen Spann- und Lösestellung bewegbar. Im Bereich der Aufnahmeöffnung sind im Grundkörper oftmals zusätzliche Zentrierelemente vorgesehen, durch welche die auszuwuchtenden oder zu vermessenden Bauteile radial vorgespannt sind. Um die eingespannten Bauteile nach dem Auswuchten oder Vermessen wieder lösen zu können, müssen von der Zangenbetätigungseinheit dann aber auch die durch die Zentrierelemente aufgebrachten zusätzlichen Kräfte überwunden werden. Dafür müssen aber die Kräfte der Zangenbetätigungseinheit erhöht werden, was zu ruckartigen Bewegungen der Zangenbetätigungseinheit führen kann. Da die axiale Bewegung der Zangenbetätigungseinheit in der Regel auch zum Herausdrücken des Bauteils aus dem Auswucht- oder Messadapter dient, kann dies zu einem unerwünschten stoßartigen Auswurf der auszuwuchtenden bzw. zu vermessenden Bauteile aus dem Grundkörper führen. Dies ist vor allem dann der Fall, wenn der Ausstoß durch Luftdruck erfolgt.

Ein Auswucht-oder Messadapter gemäß dem Oberbegriff des Anspruchs 1 ist aus WO 2010/073501 A1 bekannt. In der WO 2010/073501 A1 ist eine Arbeitsspindel einer Werkzeugmaschine mit einer innerhalb des Arbeitsspindel integrierten Werkzeugspannvorrichtung offenbart. Die Werkzeugspannvorrichtung enthält ein innerhalb der Arbeitsspindel angeordnetes zangenförmiges Spannelement, das durch den Druck einer in der Arbeitsspindel angeordneten Gasfeder in eine eingezogene Spannstellung gedrückt wird. Die Gasfeder enthält einen innerhalb der Arbeitsspindel axial beweglichen Zylinder und einen innerhalb des Zylinders angeordneten Kolben, der über einen Querstift und eine Buchse fest mit der Arbeitsspindel verbunden ist. Durch eine am hinteren Ende der Arbeitsspindel angeordnete Löseeinrichtung ist der axial bewegliche Zylinder der Gasfeder in Richtung des vorderen Endes der Arbeitsspindel bewegbar, damit das mit dem Zylinder gekoppelte zangenförmige Spannelement in eine Lösestellung gelangt.

Aufgabe der Erfindung ist es, einen Auswucht- oder Messadapter zu schaffen, der ein positionsgenaues Spannen und stoßfreies Lösen eines Bauteils ermöglicht.

Diese Aufgabe wird durch einen Auswucht- oder Messadapter mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Auswucht- oder Messadapter ist an dem beweglichen Spannelement eine Bremseinrichtung zur Erzeugung einer konstanten Vorschubgeschwindigkeit des Spannelements bei dessen Bewegung angeordnet, wobei die Bremseinrichtung eine oder mehrere Fluidbremsen umfasst. Dadurch können stoßartige Bewegungen des Spannelements und dadurch bedingte unkontrollierte Ausstoßbewegungen vermieden werden. Durch die Bremseinrichtung kann kinetische Energie absorbiert und die Aufprallgeschwindigkeit des Spannelements beim Ausstoßen der auszuwuchtenden bzw. zu vermessenden Bauteile reduziert werden. Außerdem kann ein Rückprallen der bewegten Massen vermieden werden.

In einer besonders zweckmäßigen Ausführung können die Fluidbremsen jeweils einem innerhalb einer Aufnahme axial verschiebbaren Bremskolben umfassen. Die Fluidbremsen können vorzugsweise als Vorschub-Ölbremsen mit einem Hydrauliköl als Bremsfluid ausgeführt sein.

Die Bremseinrichtung kann in einer konstruktiv vorteilhaften Ausführung zwischen dem Grundkörper und einem Betätigungskolben der Spannvorrichtung angeordnet sein. Die Bremseinrichtung könnte aber auch zwischen dem Betätigungskolben und einem dem Spannelement zugeordneten weiteren Betätigungselement angeordnet sein.

Der Bremskolben kann in einer einfachen und vorteilhaften Ausführung z.B. innerhalb einer als Bohrung ausgebildeten Aufnahme axial verschiebbar und durch eine Radialdichtung abgedichtet geführt sein. Die als Bohrung ausgebildete Aufnahme kann in dem Betätigungskolben und der Bremskolben an dem Grundkörper angeordnet sein. Es ist aber auch möglich, den Bremskolben an dem Betätigungskolben und die dazugehörige Aufnahme an dem Grundkörper vorzusehen.

Der Bremskolben kann in einer weiteren möglichen Ausführung aber auch in einer als hohlzylindrischer Außenkörper ausgebildeten Aufnahme verschiebbar angeordnet sein und eine nach außen vorstehende Kolbenstange enthalten. Das untere Ende der Kolbenstange kann über einen Aufprallkopf in Bohrungen an der Oberseite des Betätigungskolbens eingreifen. Der Außenkörper kann in entsprechenden Axialbohrungen eines Unterteils des Grundkörpers angeordnet sein und sich mit seinem oberen Ende an der Unterseite eines Oberteils des Grundkörpers abstützen.

Zweckmäßigerweise weisen die Fluidbremsen eine innerhalb des Bremskolbens angeordnete Durchgangsöffnung zur Verbindung zweier mit einem Fluid gefüllter Kammern auf. Beim Aufbringen einer Kraft auf die Fluidbremse muss das Fluid über die Durchgangsöffnung strömen. Der dabei entstehende Staudruck erzeugt die zur Bewegungskontrolle benötigte Gegenkraft.

In einer weiteren vorteilhaften Ausführung ist in der Aufnahme mindestens ein Zentrierelement zur zentrischen Halterung des Bauteils innerhalb des Grundkörpers eingesetzt. Dadurch kann eine positionsgenaue und zentrische Aufnahme des Bauteils innerhalb des Grundkörpers erreicht werden.

Die Spannvorrichtung kann in einer möglichen Ausführung z.B. eine Spannzange und ein axial verschiebbares Spannelement zur Betätigung der Spannzange umfassen. Die Spannvorrichtung kann aber in einer einfachen Ausführung auch als Gewindestange zum Eingriff in das auszuwuchtende oder zu vermessende Bauteil ausgeführt sein. Auch andere geeignete Spannvorrichtungen zum zentrischen Spannen sind denkbar. Das Spannelement kann einen stangenförmigen Führungsbereich enthalten, durch den das Spannelement z.B. über eine Lagerhülse axial verschiebbar in dem Grundkörper gelagert ist. Das Spannelement kann einen Betätigungskopf enthalten, an dem eine äußere Konusfläche und ein zylindrischer Bereich mit einer zylindrischen Außenfläche zur Anlage der Spannzungen vorgesehen sind.

Die Erfindung betrifft ferner eine Auswucht- oder Messmaschine, die einen Auswucht- oder Messadapter mit den vorstehend beschriebenen Merkmalen enthält.

Weitere Besonderheiten und Vorzüge der Erfindung ergeben sich aus der folgenden Beschreibung bevorzugter Ausführungsbeispiele anhand der Zeichnung. Es zeigen:
- **Figur 1:**: einen Längsschnitt eines ersten Ausführungsbeispiels eines Auswucht- oder Messadapters in einer Spannstellung;
- **Figur 2:**: einen Längsschnitt des Auswucht- oder Messadapters von Figur 1 in einer Lösestellung;
- **Figur 3:**: einen Längsschnitt eines zweiten Ausführungsbeispiels eines Auswucht- oder Messadapters in einer Spannstellung und
- **Figur 4:**: einen Längsschnitt des Auswucht- oder Messadapters von Figur 3 in einer Lösestellung;

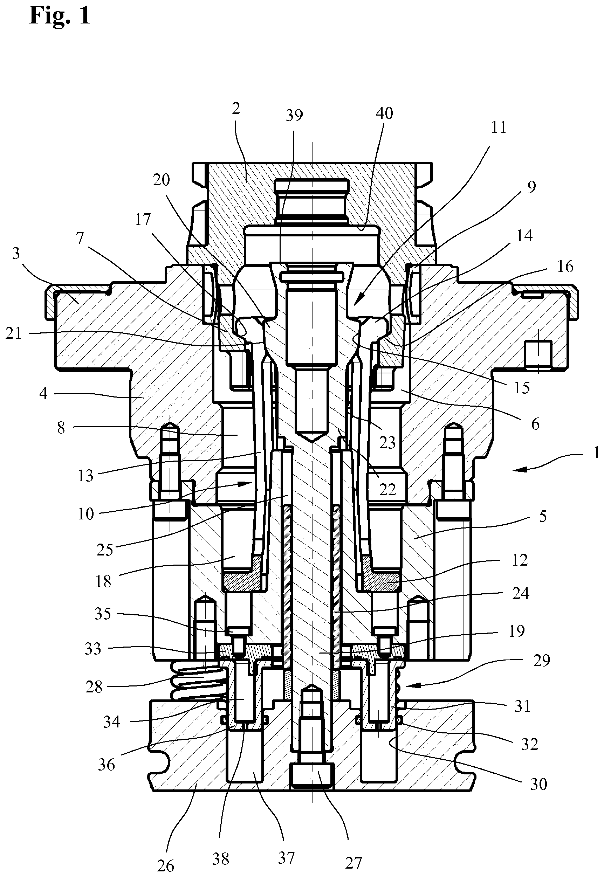

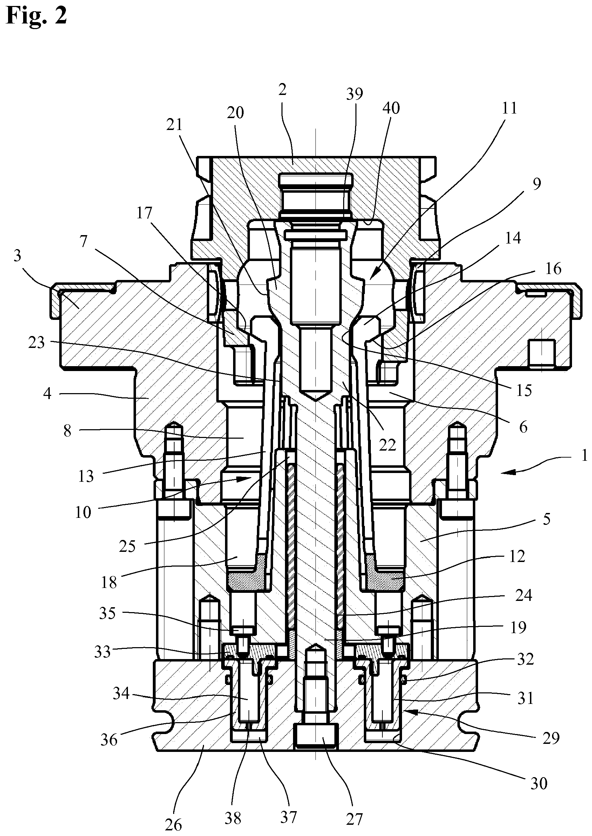

Der in den Figuren 1 und 2 in einer Spann- und Lösestellung gezeigte Auswucht- oder Messadapter 1 ist zum Spannen eines rotierenden Bauteils 2 an einer Auswucht- oder Messmaschine konzipiert. Bei derartigen Maschinen ist eine zentrische Aufnahme des auszuwuchtenden oder zu messenden Bauteils 2 mit hoher Rundlauf- und Wiederholgenauigkeit von besonderer Bedeutung. Der Auswucht- oder Messadapter 1 enthält einen z.B. in die Antriebsspindel der Auswucht- oder Messmaschine einsetzbaren Grundkörper, der bei der gezeigten Ausführung aus einem mit einem Flansch 3 versehenen hohlzylindrischen Oberteil 4 und einem mit diesem verschraubten Unterteil 5 besteht. Über den Flansch 3 kann der Grundkörper z.B. an der Oberseite der Antriebsspindel befestigt werden.

Das Oberteil 4 weist eine hier als Öffnung ausgebildete Aufnahme 6 für einen Schaft 7 des zu spannenden Bauteils 2 und einen unteren Durchgangsbereich 8 auf. Die Aufnahme 6 kann aber auch als Planauflage oder dgl. ausgeführt sein. Bei dem Bauteil 2 kann es sich z.B. um eine Werkzeugaufnahme für ein Bohr-, Fräs- oder Schleifwerkzeug, einen Rotor oder ein anderes auszuwuchtendes oder zu vermessendes Maschinenteil handeln. Der Schaft 7 ist konisch ausgebildet und kann einen polygonalen, kreisrunden oder sonstigen geeigneten Querschnitt aufweisen. Die Aufnahme 6 des Oberteils 4 ist konisch und weist eine an den Querschnitt des Schafts 7 angepasste Innenkontur auf. In die Aufnahme 6 des Oberteils 4 ist ein z.B. als Spannring ausgebildetes Zentrierelement 9 zur zentrischen Halterung des Bauteils 2 innerhalb des Grundkörpers eingesetzt.

In dem aus dem Oberteil 4 und dem Unterteil 5 zusammengesetzten Grundkörper sind eine Spannzange 10 und ein zu dieser koaxiales Spannelement 11 zur Betätigung der Spannzange 10 untergebracht. Die Spannzange 10 weist einen hülsenförmigen Sockel 12 und mehrere in Umfangsrichtung durch axiale Schlitze voneinander getrennte, radial federnde Spannzungen 13 mit einem als Verdickung ausgebildeten Spannbereich 14 an den zum spannenden Bauteil 2 gewandten freien vorderen Ende der Spannzungen 13 auf. An dem Spannbereich 14 weisen die Spannzungen 13 eine innere Anlagefläche 15 zur Anlage an dem Betätigungselement 11 und eine äußere Spannfläche 16 zur Anlage an einer inneren Gegenfläche 17 an der Innenseite des Schafts 7 des Bauteils 2 auf. Über den hülsenförmigen Sockel 12 ist die Spannzange 10 mit Hilfe nicht dargestellter Schrauben in einer Ringnut 18 des Unterteils 5 befestigt.

Das Spannelement 11 enthält einen unteren stangenförmigen Führungsbereich 19 und einen oberen Betätigungskopf 20, der eine äußere Konusfläche 21 und einen darunter liegenden zylindrischen Bereich 22 mit einer zylindrischen Außenfläche 23 umfasst. Durch den stangenförmigen Führungsbereich 19 ist das Spannelement 11 über eine mit Wälzkörpern versehene Lagerhülse 24 axial verschiebbar in einer Durchgangsbohrung 25 im Unterteil 5 des Grundkörpers geführt. An dem gegenüber dem Unterteil 5 nach unten vorstehenden Ende des stangenförmigen Führungsbereichs 19 ist ein Betätigungskolben 26 mit Hilfe einer Schraube 27 befestigt. Durch das Spannelement 11 sind die elastisch federnden Spannzungen 13 der Spannzange 11 zwischen einer in Figur 1 gezeigten Spannstellung und einer in Figur 2 gezeigten Lösestellung bewegbar.

Zwischen dem Unterteil 5 und dem Betätigungskolben 26 sind in Figur 1 erkennbare Druckfedern 28 eingespannt. Die Druckfedern 28 sind zur stabilen Halterung in nicht erkennbare Sacklöcher im Unterteil 5 und im Kolben 26 eingesetzt. Durch diese Druckfedern 28 wird das Spannelement 11 in die in Figur 1 gezeigte Spannstellung gedrückt. Durch Verschiebung des Betätigungskolbens 26 entgegen der Kraft der Druckfedern 28 kann das Betätigungselement 11 aus der in Figur 1 gezeigten Spannstellung in die in Figur 2 gezeigte Lösestellung verschoben werden. Hierzu kann der Betätigungskolben 26 über eine radiale Dichtung abgedichtet in der Antriebsspindel der Auswucht- oder Messmaschine axial verschiebbar angeordnet sein und von der Unterseite mit Druckluft beaufschlagt werden.

Zwischen dem Unterteil 5 des Grundkörpers und dem Betätigungskolben 26 ist außerdem eine Bremseinrichtung 29 mit mehreren in Umfangrichtung voneinander beabstandeten Fluidbremsen angeordnet. Die Fluidbremsen weisen einen innerhalb einer Aufnahme 30 verschiebbar geführten und radial abgedichteten Bremskolben 31 auf. Bei der gezeigten Ausführung sind die Bremskolben 31 über Radialdichtungen 32 abgedichtet in als Bohrungen ausgeführten Aufnahmen 30 auf der zum Unterteil 5 weisenden Oberseite des Betätigungskolbens 26 verschiebbar. Die Bremskolben 31 enthalten einen durch eine Abdeckung 33 abgedichtete erste Kammer 34 und sind mit Hilfe von Schrauben 35 über die Abdeckung 33 nach unten vorstehend an der Unterseite des Unterteils 5 befestigt. Zwischen einem Boden 36 des Bremskolbens 31 und den als Bohrungen ausgeführten Aufnahmen 30 wird eine zweite Kammer 37 begrenzt. In dem Boden 36 des Bremskolbens 31 ist eine Durchgangsöffnung 38 zur Verbindung der ersten Kammer 34 mit der zweiten Kammer 37 vorgesehen.

Im Folgenden wird die Funktionsweise des vorstehend beschriebenen Auswucht- oder Messadapters anhand der Figuren 1 und 2 erläutert:
In Figur 1 ist der Auswuchtadapter 1 in einer Spannstellung gezeigt. In dieser Stellung wird das Spannelement 11 über die zwischen dem Unterteil 5 und dem Betätigungskolben 24 eingespannten Druckfedern 28 nach unten gedrückt. Durch die äußere Konusfläche 21 am oberen Betätigungskopf 20 des Spannelements 11 werden dabei die Spannbereiche 14 an den oberen freien Enden der Spannzungen 13 radial nach außen gedrückt, so dass die äußeren Spannflächen 16 zur Anlage an der inneren Gegenfläche 17 an der Innenseite des Schafts 7 gelangen und diesen in die Aufnahmeöffnung 6 einziehen.

Durch Druckbeaufschlagung des Betätigungskolbens 26 mit Druckluft oder einem anderen Druckfluid kann das Spannelement 11 entgegen der Kraft der Druckfedern 28 nach oben in eine in Figur 2 gezeigte Lösestellung gedrückt werden. Dabei können die Spannbereiche 14 der Spannzungen 13 mit ihrer inneren Anlagefläche 15 zur Anlage an der zylindrischen Außenfläche 23 am zylindrischen Bereich 22 des Spannelements 11 gelangen. Da das Spannelement 11 in dem oberen konischen Bereich 20 einen größeren Durchmesser als in dem darunter angeordneten zylindrischen Bereich 22 aufweist, können die vorderen Spannbereiche 14 der Spannzange 13 radial nach innen kippen und geben das Bauteil 2 zur Entnahme bzw. zum Einsetzen in den Auswuchtadapter 1 frei. Das Spannelement 11 weist an seinem oberen Ende eine obere Stirnfläche 39 auf, die bei der in Figur 2 gezeigten Lösestellung zur Anlage an einer inneren Planfläche 40 gelangt und das Bauteil 2 aus der Aufnahmeöffnung herausdrückt.

Beim Einfahren der Bremskolben 31 in die als Bohrungen ausgeführten Aufnahmen 30 wird das in der Kammer 37 befindliche Druckfluid über die Durchgangsöffnung 38 in die Kammer 34 verdrängt. Der dabei entstehende Staudruck erzeugt die zur Steuerung der Vorschubgeschwindigkeit benötigte Gegenkraft. Mit Hilfe der Bremseinrichtung 29 kann eine konstante Vorschubgeschwindigkeit der Zangenbetätigungseinrichtung über den Hub erreicht und dadurch ein schlagartiges Ausfahren des Spannelements 11 vermeiden werden. Das Spannelement 11 fährt auch bei schlagartiger Beaufschlagung des Betätigungskolbens 26 mit einer konstanten Geschwindigkeit aus, so dass ein stoßartiger Aufprall des Spannelements 11 auf das Bauteil 2 mit hoher Aufprallgeschwindigkeit und ein dadurch bedingtes unkontrolliertes Ausstoßen des Bauteils 2 vermieden werden kann.

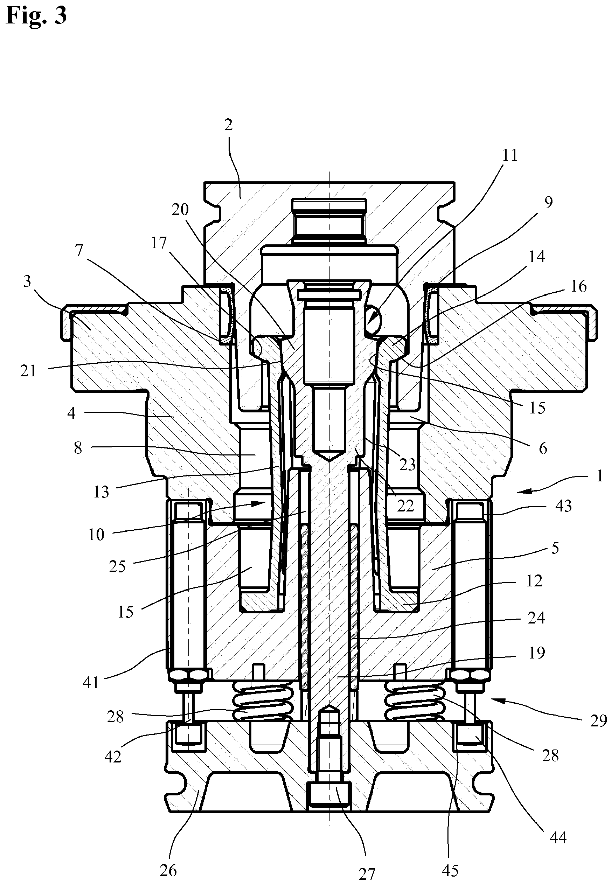

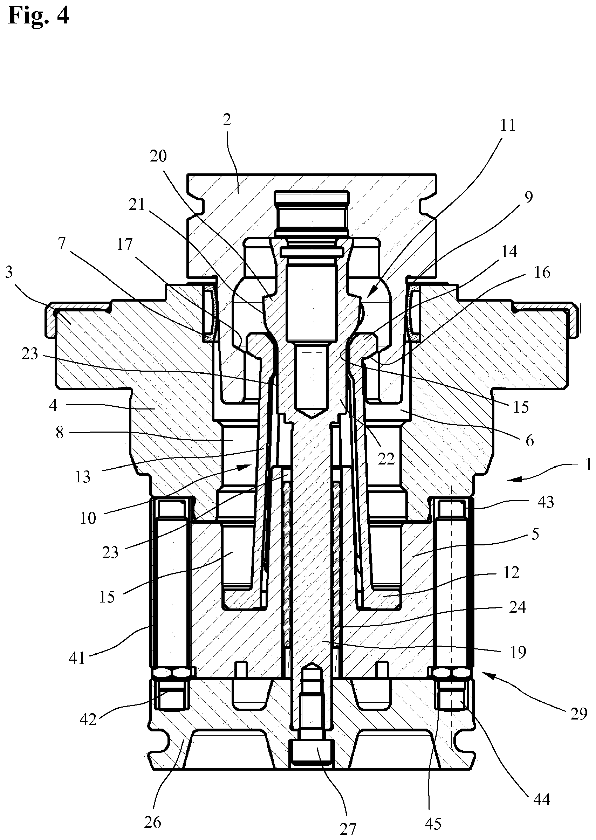

In den Figuren 3 und 4 ist ein weiteres Ausführungsbeispiel eines Auswucht- oder Messadapters 1 gezeigt. Diese Ausführung entspricht im Grundaufbau und der Funktionsweise der Ausführung von Figur 1 und 2, so dass einander entsprechende Bauteile mit denselben Bezugszeichen versehen sind. Auch hier ist innerhalb eines aus einem Oberteil 4 und einem Unterteil 5 zusammengesetzten Grundkörpers eine Spannzange 10 mit mehreren radial federnden Spannzungen 13 angeordnet. Die Spannzungen 13 sind durch eine Zangenbetätigungseinrichtung mit einem der Spannzange 10 zugeordneten Betätigungselement 11 und einem Betätigungskolben 26 zwischen einer Spann- und Lösestellung bewegbar. Zwischen dem Unterteil 5 und dem Betätigungskolben 26 sind in Figur 1 erkennbare Druckfedern 28 eingespannt. Durch diese Druckfedern 28 wird das Betätigungselement 11 in die in Figur 3 gezeigte Spannstellung gedrückt. Ebenso ist auch bei dieser Ausführung eine Bremseinrichtung 29 mit mehreren in Umfangsrichtung gleichmäßig verteilten Fluidbremsen vorgesehen.

Im Unterschied zu der Ausführung der Figuren 1 und 2 weisen hier die Fluidbremsen eine als hohlzylindrischer Außenkörper ausgebildete Aufnahme 41 und einen in dieser axial verschiebbaren Bremskolben mit einer nach außen vorstehenden Kolbenstange 42 auf. Der Außenkörper 41 ist in entsprechenden Axialbohrungen 43 des Unterteils 5 angeordnet und stützt sich mit seinem oberen Ende an der Unterseite des Oberteils 4 ab. Das untere Ende der nach unten vorstehenden Kolbenstangen 42 greift über einen Aufprallkopf 44 in Bohrungen 45 an der Oberseite des Betätigungskolbens 26 ein. Auch hier wird durch die Fluidbremsen eine konstante Vorschubgeschwindigkeit der Zangenbetätigungseinrichtung über den Hub erreicht.

## Patentansprüche

1. Auswucht- oder Messadapter (1), der einen Grundköper (4, 5) mit einer Aufnahme (6) für das auszuwuchtende oder zu vermessende Bauteil (2) und eine dem Grundkörper (4, 5) zugeordnete Spannvorrichtung mit einem beweglichen Spannelement (11) zum Spannen und Lösen des Bauteils (2) gegenüber dem Grundkörper (4, 5) enthält, **dadurch gekennzeichnet, dass** an dem beweglichen Spannelement (11) eine Bremseinrichtung (29) zur Erzeugung einer konstanten Vorschubgeschwindigkeit des Spannelements (11) bei dessen Lösebewegung angeordnet ist, wobei die Bremseinrichtung (29) eine oder mehrere Fluidbremsen (30, 31; 41, 42) umfasst.

2. Auswucht- oder Messadapter nach Anspruch 1, **dadurch gekennzeichnet, dass** die Fluidbremsen (30, 31; 41, 42) einen innerhalb einer Aufnahme (30; 41) axial verschiebbaren Bremskolben (31) enthalten.

3. Auswucht- oder Messadapter nach Anspruch 2, **dadurch gekennzeichnet, dass** die Bremseineinrichtung (29) zwischen dem Grundkörper (4, 5) und einem Betätigungskolben (26) des beweglichen Spannelements (11) angeordnet ist.

4. Auswucht- oder Messadapter nach Anspruch 2 oder 3, **dadurch gekennzeichnet, dass** der Bremskolben (31) innerhalb einer als Bohrung ausgebildeten Aufnahme (30) axial verschiebbar und durch eine Radialdichtung (32) abgedichtet geführt ist.

5. Auswucht- oder Messadapter nach Anspruch 4, **dadurch gekennzeichnet, dass** die als Bohrung ausgebildete Aufnahme (30) in dem Betätigungskolben (26) und der Bremskolben (31) an dem Grundkörper (4, 5) angeordnet sind.

6. Auswucht- oder Messadapter nach Anspruch 2, **dadurch gekennzeichnet, dass** der Bremskolben (31) in einer als hohlzylindrischer Außenkörper ausgebildeten Aufnahme (41) verschiebbar angeordnet ist und eine nach außen vorstehende Kolbenstange (42) enthält.

7. Auswucht- oder Messadapter nach Anspruch 6, **dadurch gekennzeichnet, dass** das untere Ende der Kolbenstange (42) über einen Aufprallkopf (44) in Bohrungen (45) an der Oberseite des Betätigungskolbens (26) eingreift.

8. Auswucht- oder Messadapter nach Anspruch 6 oder 7, **dadurch gekennzeichnet, dass** der Außenkörper (41) in entsprechenden Axialbohrungen (43) eines Unterteils (5) des Grundkörpers (4,5) angeordnet ist und sich mit seinem oberen Ende an der Unterseite eines Oberteils (4) des Grundkörpers (4, 5) abstützt.

9. Auswucht- oder Messadapter nach einem der Ansprüche 2 bis 8, **dadurch gekennzeichnet, dass** das die oder jede Fluidbremse (30, 31; 41, 42) eine innerhalb des Bremskolbens (31) angeordnete Durchgangsöffnung (38) zur Verbindung zweier mit einem Fluid gefüllter Kammern (34, 37) enthält.

10. Auswucht- oder Messadapter nach einem der Ansprüche 1 bis 9, **dadurch gekennzeichnet, dass** in der Aufnahme (6) mindestens ein Zentrierelement (9) zur zentrischen Halterung des Bauteils (2) innerhalb des Grundkörpers (5, 6) eingesetzt ist.

11. Auswucht- oder Messadapter nach einem der Ansprüche 1 bis 10, **dadurch gekennzeichnet, dass** die Spannvorrichtung eine Spannzange (10) und ein axial verschiebbares Spannelement (11) zur Betätigung einer Spannzange (10) umfasst.

12. Auswucht- oder Messadapter nach Anspruch 11, **dadurch gekennzeichnet, dass** das Spannelement (11) einen stangenförmigen Führungsbereich (19) enthält, durch den das Spannelement (11) über eine Lagerhülse (24) axial verschiebbar in dem Grundkörper (4, 5) gelagert ist.

13. Auswucht- oder Messadapter nach Anspruch 11 oder 12, **dadurch gekennzeichnet, dass** das Spannelement (11) einen Betätigungskopf (20) mit einer äußeren Konusfläche (21) und einen zylindrischen Bereich (22) mit einer zylindrischen Außenfläche (23) zur Anlage von Spannzungen (13) der Spannzange (10) enthält.

14. Auswucht- oder Messmaschine mit einem Auswucht- oder Messadapter (1), **dadurch gekennzeichnet, dass** der Auswucht- oder Messadapter (1) nach einem der Ansprüche 1 bis 13 ausgebildet ist.

## Claims

1. Balancing or measuring adapter (1) which comprises a main body (4, 5), with a receptacle (6) for the component (2) for balancing or measuring, and a clamping device, which is assigned to the main body (4, 5) and which has a movable clamping element (11) for clamping and releasing the component (2) in relation to the main body (4, 5), **characterized in that**, on the movable clamping element (11), there is arranged a brake device (29) for generating a constant advancing speed of the clamping element (11) during the release movement thereof, wherein the brake device (29) comprises one or more fluid brakes (30, 31; 41, 42).

2. Balancing or measuring adapter according to Claim 1, **characterized in that** the fluid brakes (30, 31; 41, 42) comprise a brake piston (31) which is axially displaceable within a receptacle (30; 41).

3. Balancing or measuring adapter according to Claim 2, **characterized in that** the brake device (29) is arranged between the main body (4, 5) and an actuating piston (26) of the movable clamping element (11).

4. Balancing or measuring adapter according to Claim 2 or 3, **characterized in that** the brake piston (31) is guided so as to be axially displaceable, and so as to be sealed by means of a radial seal (32), within a receptacle (30) formed as a bore.

5. Balancing or measuring adapter according to Claim 4, **characterized in that** the receptacle (30) formed as a bore is arranged in the actuating piston (26), and the brake piston (31) is arranged on the main body (4, 5).

6. Balancing or measuring adapter according to Claim 2, **characterized in that** the brake piston (31) is arranged in a displaceable manner in a receptacle (41) formed as a hollow cylindrical outer body and comprises an outwardly projecting piston rod (42).

7. Balancing or measuring adapter according to Claim 6, **characterized in that** the lower end of the piston rod (42) engages by way of an impact head (44) into bores (45) on the top side of the actuating piston (26).

8. Balancing or measuring adapter according to Claim 6 or 7, **characterized in that** the outer body (41) is arranged in corresponding axial bores (43) of a bottom part (5) of the main body (4, 5) and is supported with its upper end on the bottom side of a top part (4) of the main body (4, 5).

9. Balancing or measuring adapter according to any of Claims 2 to 8, **characterized in that** the or each fluid brake (30, 31; 41, 42) comprises a passage opening (38) which is arranged within the brake piston (31) and which serves for connecting two chambers (34, 37) which are filled with a fluid.

10. Balancing or measuring adapter according to any of Claims 1 to 9, **characterized in that**, in the receptacle (6), there is inserted at least one centring element (9) for holding the component (2) centrally within the main body (5, 6).

11. Balancing or measuring adapter according to any of Claims 1 to 10, **characterized in that** the clamping device comprises a clamping collet (10) and an axially displaceable clamping element (11) for actuating a clamping collet (10).

12. Balancing or measuring adapter according to Claim 11, **characterized in that** the clamping element (11) comprises a rod-shaped guide region (19) by which the clamping element (11) is mounted in axially displaceable fashion in the main body (4, 5) by means of a bearing sleeve (24).

13. Balancing or measuring adapter according to Claim 11 or 12, **characterized in that** the clamping element (11) comprises an actuating head (20) with an outer conical surface (21) and comprises a cylindrical region (22) with a cylindrical outer surface (23) for the abutment of clamping tongues (13) of the clamping collet (10).

14. Balancing or measuring machine having a balancing or measuring adapter (1), **characterized in that** the balancing or measuring adapter (1) is designed according to any of Claims 1 to 13.

## Revendications

1. Adaptateur d'équilibrage ou de mesure (1), qui comporte un corps de base (4, 5) doté d'un logement (6) pour le composant (2) à équilibrer ou à mesurer et un dispositif de serrage associé au corps de base (4, 5) et doté d'un élément de serrage mobile (11) servant à serrer et desserrer le composant (2) par rapport au corps de base (4, 5), **caractérisé en ce qu'**un dispositif de freinage (29) servant à produire une vitesse d'avance constante de l'élément de serrage (11) lors de son mouvement de desserrage est disposé sur l'élément de serrage mobile (11), le dispositif de freinage (29) comportant un ou plusieurs freins à fluide (30, 31 ; 41, 42) .

2. Adaptateur d'équilibrage ou de mesure selon la revendication 1, **caractérisé en ce que** les freins à fluide (30, 31 ; 41, 42) comportent un piston de frein (31) déplaçable axialement à l'intérieur d'un logement (30 ; 41).

3. Adaptateur d'équilibrage ou de mesure selon la revendication 2, **caractérisé en ce que** le dispositif de freinage (29) est disposé entre le corps de base (4, 5) et un piston d'actionnement (26) de l'élément de serrage mobile (11).

4. Adaptateur d'équilibrage ou de mesure selon la revendication 2 ou 3, **caractérisé en ce que** le piston de frein (31) est déplaçable axialement à l'intérieur d'un logement (30) réalisé sous forme d'alésage et est guidé de manière étanche par un joint d'étanchéité radial (32) .

5. Adaptateur d'équilibrage ou de mesure selon la revendication 4, **caractérisé en ce que** le logement (30) réalisé sous forme d'alésage est disposé dans le piston d'actionnement (26) et le piston de frein (31) est disposé sur le corps de base (4, 5).

6. Adaptateur d'équilibrage ou de mesure selon la revendication 2, **caractérisé en ce que** le piston de frein (31) est disposé de manière déplaçable dans un logement (41) réalisé sous forme de corps extérieur cylindrique creux et comporte une tige de piston (42) faisant saillie vers l'extérieur.

7. Adaptateur d'équilibrage ou de mesure selon la revendication 6, **caractérisé en ce que** l'extrémité inférieure de la tige de piston (42) vient en prise par le biais d'une tête d'impact (44) dans des alésages (45) sur le côté supérieur du piston d'actionnement (26).

8. Adaptateur d'équilibrage ou de mesure selon la revendication 6 ou 7, **caractérisé en ce que** le corps extérieur (41) est disposé dans des alésages axiaux (43) correspondants d'une partie inférieure (5) du corps de base (4, 5) et est supporté par son extrémité supérieure sur le côté inférieur d'une partie supérieure (4) du corps de base (4, 5).

9. Adaptateur d'équilibrage ou de mesure selon l'une des revendications 2 à 8, **caractérisé en ce que** le ou chaque frein à fluide (30, 31 ; 41, 42) comporte une ouverture traversante (38) disposée à l'intérieur du piston de frein (31) pour la liaison de deux chambres (34, 37) remplies d'un fluide.

10. Adaptateur d'équilibrage ou de mesure selon l'une des revendications 1 à 9, **caractérisé en ce qu'**au moins un élément de centrage (9) pour le support centré du composant (2) à l'intérieur du corps de base (5, 6) est inséré dans le logement (6).

11. Adaptateur d'équilibrage ou de mesure selon l'une des revendications 1 à 10, **caractérisé en ce que** le dispositif de serrage comporte une pince de serrage (10) et un élément de serrage (11) déplaçable axialement pour l'actionnement d'une pince de serrage (10).

12. Adaptateur d'équilibrage ou de mesure selon la revendication 11, **caractérisé en ce que** l'élément de serrage (11) comporte une région de guidage (19) en forme de tige, au moyen de laquelle l'élément de serrage (11) est monté de manière déplaçable axialement dans le corps de base (4, 5) par le biais d'une douille de palier (24).

13. Adaptateur d'équilibrage ou de mesure selon la revendication 11 ou 12, **caractérisé en ce que** l'élément de serrage (11) comporte une tête d'actionnement (20) dotée d'une surface conique extérieure (21) et une région cylindrique (22) dotée d'une surface extérieure cylindrique (23) pour l'appui de languettes de serrage (13) de la pince de serrage (10).

14. Machine d'équilibrage ou de mesure comprenant un adaptateur d'équilibrage ou de mesure (1), **caractérisée en ce que** l'adaptateur d'équilibrage ou de mesure (1) est réalisé selon l'une des revendications 1 à 13.
